# EUROPEAN PATENT APPLICATION

(11) **EP 2 709 321 A1**
(43) Date of publication of application: **19.03.2014**
(21) Application number: 12819216.8
(22) Date of filing: 05.07.2012
(51) Int. Cl.: H04L 12/70

(54) **METHOD, DEVICE AND SYSTEM FOR REALIZING APPLICATION PERFORMANCE SELF-ADAPTION**

(30) Priority: 01.08.2011 CN 201110218361
(71) Applicant: Huawei Technologies Co., Ltd, Shenzhen, Guangdong 518129 (CN)
(72) Inventor: LIU, Ying, Shenzhen Guangdong 518129 (CN); HU, Shihui, Shenzhen Guangdong 518129 (CN); YU, Delei, Shenzhen Guangdong 518129 (CN)
(74) Representative: Goddar, Heinz J.
(86) International application number: PCT/CN2012/078237
(87) International publication number: WO 2013/017001

(57) **Abstract**

Embodiments of the present invention disclose a method, an apparatus, and a system for implementing adaptive application performance. The method includes: obtaining application performance of at least one application; generating a new application processing policy when the obtained application performance meets a preset adaptive adjustment condition; and sending the generated new application processing policy to a service router and an application processing server. When the present invention is applied, a lower-priority application can transmit complete data while fulfillment of the SLA of a higher-priority is ensured without affecting normal use of the lower-priority application, and it is ensured that the SLA requirements of applications of all priorities of users are fulfilled.

## Description

This application claims priority to Chinese Patent Application No. 201110218361.X, filed with the Chinese Patent Office on August 1, 2011 and entitled "METHOD, APPARATUS, AND SYSTEM FOR IMPLEMENTING ADAPTIVE APPLICATION PERFORMANCE", which is incorporated herein by reference in its entirety.

### TECHNICAL FIELD

The present invention relates to the field of network technologies, and in particular to a method, an apparatus, and a system for implementing adaptive application performance.

### BACKGROUND

If a network provider (full name in English: Network Provider, NP for short) has deployed an application delivery network (full name in English: Application Delivery Network, ADN for short), a service point of presence (full name in English: Point of Presence, POP for short) in the network can analyze an application layer of a data packet, and then the NP can perform control, management, reassembly, and re-generation of a new packet for different applications, where the POP may include a service router for transmitting and receiving an application packet and an application processing server for processing the application packet.

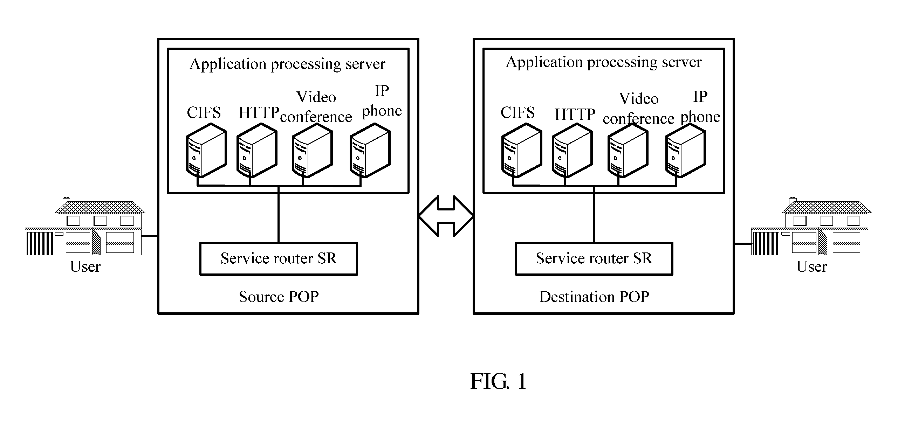

If an enterprise selects an ADN for use between a head office and a branch, and between the head office/branch and a cloud computing center, the NP needs to ensure performance of different applications. With different application priorities within the enterprise, each application corresponds to a different Service Level Agreement (full name in English: Service-Level Agreement, SLA for short). The ADN needs to fulfill the application SLA of each priority, where the SLA includes the items of: a limit of bandwidth allocated to a customer, the number of customers that can be served simultaneously, traffic priority of each type of customer, technical support and services for the customer, and so on. Table 1 shows one type of SLA signed between the enterprise and the NP, which includes a common Internet file system (full name in English: Common Internet File System, CIFS for short) and a Hyper Text Transfer Protocol (full name in English: Hyper Text Transfer Protocol, HTTP for short). FIG. 1 is a schematic structural diagram of an application delivery network ADN in the prior art.

**Table 1**

| Application | IP phone | Video conference | Shared desktop | CIFS | HTTP |
|---|---|---|---|---|---|
| Priority | High | Medium and high | Medium and high | Medium | Low |
| Maximum bandwidth occupancy rate | 60% | 30% | | 20% | 10% |

If the NP deploys multiple types of application processing servers at a service point of presence POP, after a service router (full name in English: Service Router, SR for short) receives a packet of an application ("application packet" for short), the service router queries a packet redirection table on a local area network (full name in English: Local Area Network, LAN for short) side according to quintuple information (source IP, source port, destination IP, destination port, and protocol type) of the application packet to find the application processing server (IP address of the application processing server and egress interface) corresponding to the application, and sends the application packet to the corresponding application processing server. After parsing the application packet, the application processing server generates a new application packet according to a policy customized by the NP, and then sends the new application packet to the SR. The SR delivers the new application packet to the service point of presence POP of the destination.

In the process of controlling, managing, reassembling, and transmitting various applications in the prior art, reference is made to the SLA in Table 1, and the SR controls the transmission bandwidth of each application packet according to the priority of different applications. When the bandwidth is scarce, the bandwidth of lower-priority applications is reduced to ensure the bandwidth of higher-priority applications. However, with the reduction of the bandwidth of the lower-priority applications, the packet transmission speed of the lower-priority applications is lower, or even the packet transmission of the lower-priority applications is abnormal or interrupted.

### SUMMARY

To solve the foregoing technical problems, embodiments of the present invention provide a method, an apparatus, and a system for implementing adaptive application performance, which can generate a new application processing policy for a currently transmitted application, and process and send an application according to the new application processing policy.

An embodiment of the present invention provides a method for implementing adaptive application performance, including:
obtaining application performance of at least one application, where a packet of the at least one application is transmitted on a service router;
generating a new application processing policy when the obtained application performance meets a preset adaptive adjustment condition; and
sending the new application processing policy to the service router and an application processing server.

Correspondingly, an embodiment of the present invention further provides an apparatus for implementing adaptive application performance, including:
an obtaining module, configured to obtain application performance of at least one application, where a packet of the at least one application is transmitted on a service router;
a policy processing module, configured to generate a new application processing policy when the application performance obtained by the obtaining module meets a preset adaptive adjustment condition; and
a sending module, configured to send the new application processing policy generated by the policy processing module to the service router and the application processing server.

Correspondingly, an embodiment of the present invention further provides a system for implementing adaptive transmission performance, including an application processing server, a service router, and an apparatus for implementing adaptive transmission performance, where:
the apparatus for implementing adaptive transmission performance is configured to obtain application performance of at least one application, generate a new application processing policy when the obtained application performance meets a preset adaptive adjustment condition, and send the new application processing policy to the service router and the application processing server;
the application processing server is configured to generate a new packet of the at least one application according to the new application processing policy; and
the service router is configured to adjust a parameter corresponding to the new application processing policy according to the new application processing policy, and send, according to the adjusted parameter, the new packet of the at least one application that is generated by the application processing server.

The embodiments of the present invention bring the following benefits:
If the application performance of at least one application currently transmitted meets a preset adaptive adjustment condition, a new application processing policy is generated; and the application processing server and the service router process and send the packet of the at least one application according to the new application processing policy, thereby ensuring that higher-priority applications fulfill the SLA without affecting normal use of lower-priority applications.

### BRIEF DESCRIPTION OF DRAWINGS

FIG. 1 is a schematic structural diagram of an application delivery network ADN in the prior art;
FIG. 2 is a schematic structural diagram of a system for implementing adaptive application performance according to an embodiment of the present invention;
FIG. 3 is a schematic structural diagram of an apparatus for implementing adaptive application performance shown in FIG. 2;
FIG. 4 is a schematic flowchart of a method for implementing adaptive application performance according to a first embodiment of the present invention;
FIG. 5 is a schematic flowchart of an instance of a method for implementing adaptive application performance; and
FIG. 6 is a schematic flowchart of a method for implementing adaptive application performance according to a second embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In the embodiments of the present invention, an apparatus for implementing adaptive application performance is capable of obtaining the application performance of an application transmitted on a service router, and generating a new application processing policy when the application performance meets an adaptive adjustment condition; an application processing server generates a new application packet according to the new application processing policy; and the service router adjusts, according to the new application processing policy, the bandwidth and sends the new application packet.

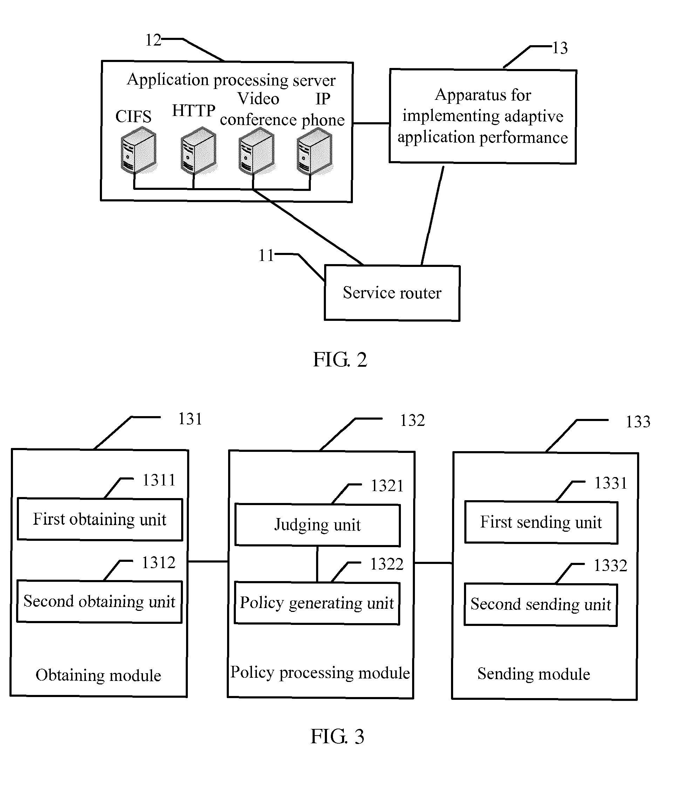

FIG. 2 is a schematic structural diagram of a system for implementing adaptive application performance according to an embodiment of the present invention. The system includes a service router 11, an application processing server 12, and an apparatus 13 for implementing adaptive application performance.

The application processing server 12 is configured to generate a packet of at least one application according to the application processing policy. There may be one or more application processing servers 12, such as an application processing server corresponding to an HTTP application, an application processing server corresponding to a video (full name in English: Video) application, and an application processing server corresponding to an Voice over Internet Protocol (full name in English: Voice over Internet Protocol, VoIP for short; sometimes also known as IP phone) application, and so on.

The service router 11 is configured to transmit the packet of the at least one application.

The apparatus 13 for implementing adaptive application performance, is configured to obtain application performance of at least one application, generate a new application processing policy when the obtained application performance meets a preset adaptive adjustment condition, and send the new application processing policy to the service router 11 and the application processing server 12.

The application processing server 12 is further configured to generate a new packet of the at least one application according to the new application processing policy.

The service router 11 is further configured to: adjust a parameter corresponding to the new application processing policy according to the new application processing policy when the new application processing policy is received from the apparatus 13 for implementing adaptive application performance; and, according to the adjusted parameter, send the new packet of the at least one application that is generated by the application processing server 12.

Optionally, the obtaining, by the apparatus 13 for implementing adaptive application performance, the application performance of at least one application may include:
receiving, by the apparatus 13 for implementing adaptive application performance, the application performance of the at least one application from the service router 11.

For example, the service router 11 may monitor the application performance of the at least one application, and sends a monitoring result to the apparatus 13 for implementing adaptive application performance. The specific application performance detected by the service router 11 may include: in the service router 11, a packet loss ratio of a sending queue corresponding to the at least one application (because the storage space of the sending queue is limited, it is possible that the packet is incapable of entering the sending queue and discarded) or a bandwidth utilization rate of the at least one application, and so on.

Optionally, the obtaining, by the apparatus 13 for implementing adaptive application performance, the application performance of at least one application transmitted on the service router 11 may further include:
calculating, by the apparatus 13 for implementing adaptive application performance, the application performance of the at least one application.

For example, the apparatus 13 for implementing adaptive application performance may monitor the service router 11 and a recipient of the packet of the at least one application, and calculate the application performance of the at least one application that is calculated according to the monitoring result. The specific information calculated by the apparatus 13 for implementing adaptive application performance may include: delay, jitter, or packet loss, or the like, which occurs when the packet of the at least one application is sent by the service router 11 to the recipient.

In practical application, the apparatus 13 for implementing adaptive application performance may use a packet loss ratio or a bandwidth utilization rate of a sending queue corresponding to the at least one application, a bandwidth utilization rate of the at least one application, and any one or more of delay, jitter, and packet loss in sending the packet of the at least one application from the service router 11 to the recipient, as the application performance of the at least one application.

Optionally, the preset adaptive adjustment condition met by the obtained application performance may be one or more of the following: the packet loss ratio of an application is greater than a packet loss ratio threshold specified in the SLA, the packet delay of an application is greater than a delay threshold specified in the SLA, and the jitter of an application is greater than a jitter threshold specified in the SLA.

Optionally, the generating, by the apparatus 13 for implementing adaptive application performance, a new application processing policy may be: generating a new application processing policy according to the obtained application performance, a preset adjustment algorithm, a preset SLA, and a type of the at least one application. Specifically, an adjustment algorithm corresponding to the type of at least one application may be determined in preset adjustment algorithms according to the type of the at least one application, and a new application processing policy is generated according to the obtained application performance, the preset SLA, and the adjustment algorithm corresponding to the type of the at least one application. For example, the generating a new application processing policy for the video application includes: in the preset adjustment algorithms, finding an adjustment algorithm corresponding to the video application and used to adjust a compression parameter and a coding parameter for the video application, and, according to the obtained application performance, the preset SLA, and the adjustment algorithm corresponding to the type of the at least one application, generating a new application processing policy that is used for instructing a video application processing server to compress the video application and adjust the coding parameter.

Optionally, the new application processing policy may specifically include one or more of the following policies: a policy of adjusting the transmission bandwidth, and a policy of adjusting the parameters for processing the packet of the at least one application (hereinafter referred to as "processing parameter"). Preferably, the adjustment of the processing parameter and transmission bandwidth falls within the requirements of the SLA; for example, when the bandwidth is increased for a higher-priority voice application, the bandwidth occupancy rate after the increase does not exceed the maximum bandwidth occupancy rate specified by the SLA for the voice application of this priority.

Optionally, the generating, by the application processing server 12, a new packet of the at least one application according to the new application processing policy may be:
adjusting, by the application processing server 12, the packet generating parameter of the at least one application according to the policy of adjusting the packet processing parameter of the at least one application, and generating a new packet of the at least one application.

Optionally, the adjusting, by the service router 11, the parameter corresponding to the new application processing policy according to the new application processing policy may specifically be:
adjusting, by the service router 11, the transmission bandwidth of the at least one application according to the policy of adjusting the transmission bandwidth.

The following gives a specific example. In this example, two applications exist: a video application and a voice application, where the priority of the voice application is higher than the priority of the video application.

When the packet loss ratio of the priority queue of the voice application exceeds a threshold, the apparatus 13 for implementing adaptive application performance generates a new application processing policy, and the service router 11 increases the bandwidth for the voice application according to the new application processing policy. Because the total bandwidth is fixed, the bandwidth of the lower-priority video application decreases correspondingly. Because the bandwidth of the video application is occupied, packet loss of the video application may occur. When the packet loss of the video application exceeds the threshold, the apparatus 13 for implementing adaptive application performance generates a new application processing policy. The application processing server 12 of the video application adjusts the processing parameter of the video application according to the new application processing policy, for example, adjusts a coding parameter to reduce the resolution of the video application, or adjusts a compression parameter to compress the data of the video application to a relatively great extent, so that the data of the video application can be transmitted as much as possible under the current bandwidth and the packet loss of the video application is reduced.

The embodiment of the present invention brings the following beneficial effects:
If the application performance of at least one application currently transmitted meets a preset adaptive adjustment condition, a new application processing policy is generated; and the application processing server and the service router process and send the packet of the at least one application according to the new application processing policy, thereby ensuring that higher-priority applications fulfill the SLA without affecting normal use of lower-priority applications.

Further, FIG. 3 is a schematic structural diagram of the apparatus for implementing adaptive application performance shown in FIG. 2. The apparatus for implementing adaptive application performance specifically includes: an obtaining module 131, a policy processing module 132, and a sending module 133.

The obtaining module 131 is configured to obtain application performance of at least one application, where a packet of the at least one application is transmitted on a service router.

The policy processing module 132 is configured to generate a new application processing policy when the application performance obtained by the obtaining module 131 meets a preset adaptive adjustment condition.

The sending module 133 is configured to send the new application processing policy generated by the policy processing module 132 to the service router and the application processing server.

Optionally, as shown in FIG. 3, the obtaining module 131 may include:
a first obtaining unit 1311, configured to receive the application performance of the at least one application from the service router 11; and
a second obtaining unit 1312, configured to calculate the application performance of the at least one application.

Optionally, as shown in FIG. 3, the policy processing module 132 may specifically include:
a judging unit 1321, configured to judge whether the obtained application performance meets the preset adaptive adjustment condition; and
a policy generating unit 1322, configured to, if a judgment result of the judging unit 1321 is that the preset adaptive adjustment condition is met, generate a new application processing policy according to the obtained application performance, a preset adjustment algorithm, a preset SLA, and a type of the at least one application.

Optionally, as shown in FIG. 3, the sending module 133 may include:
a first sending unit 1331, configured to send the new application processing policy to the application processing server; and
a second sending unit 1332, configured to send the new application processing policy to the service router.

The first sending unit 1331 sends the new application processing policy generated by the policy processing module 132 to the application processing server so that the application processing server generates a new packet of the at least one application according to the new application processing policy.

The second sending unit 1332 sends the bandwidth adjustment policy generated by the policy processing module 132 to the server router so that the service router adjusts a parameter corresponding to the new application processing policy according to the new application processing policy; and, according to the adjusted parameter, sends the new packet of the at least one application that is generated by the application processing server 12.

The embodiment of the present invention brings the following beneficial effects:
If the application performance of at least one application currently transmitted meets a preset adaptive adjustment condition, a new application processing policy is generated; and the application processing server and the service router process and send the packet of the at least one application according to the new application processing policy, thereby ensuring that higher-priority applications fulfill the SLA without affecting normal use of lower-priority applications.

The following describes in detail a method for implementing adaptive application performance according to the present invention.

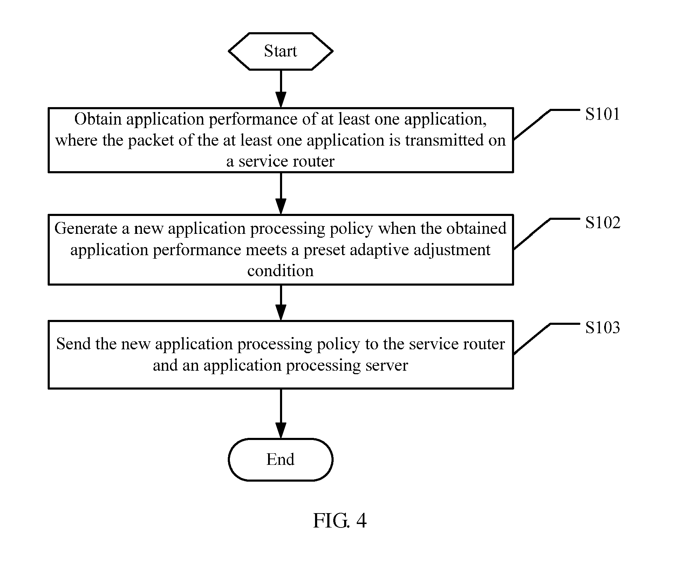

FIG. 4 is a schematic flowchart of a method for implementing adaptive application performance according to a first embodiment of the present invention. The method for implementing adaptive application performance in this embodiment includes the following steps:
S101. Obtain application performance of at least one application, where the packet of the at least one application is transmitted on a service router.

Specifically, the obtaining application performance of at least one application in S 101 may include:
in S101, receiving the application performance of the at least one application from a service router that is used to transmit the at least one application.

For example, the service router may monitor the application performance of the at least one application. The specific application performance detected by the service router may include: in the service router, a packet loss ratio of a sending queue corresponding to the at least one application (because the storage space of the sending queue is limited, it is possible that the packet is incapable of entering the sending queue and discarded) or a bandwidth utilization rate of the at least one application, and so on.

Optionally, the obtaining application performance of at least one application transmitted on the service router in S 101 may include:
in S 101, calculating the application performance of the at least one application.

For example, in S101, the service router and a recipient of the packet of the at least one application may be monitored, and the application performance of the at least one application is calculated according to the monitoring result. The specific information calculated in S 101 may include: delay, jitter, or packet loss, or the like, which occurs when the packet of the at least one application is sent by the service router to the recipient.

In actual application, in S101, a packet loss ratio or a bandwidth utilization rate of a sending queue corresponding to the at least one application, a bandwidth utilization rate of the at least one application, and any one or more of delay, jitter, and packet loss in sending the packet of the at least one application from the service router to the recipient, may be used as the application performance of the at least one application.

S102. Generate a new application processing policy when the obtained application performance meets a preset adaptive adjustment condition.

Specifically, in S101, the preset adaptive adjustment condition met by the obtained application performance may be one or more of the following: the packet loss ratio of an application is greater than a packet loss ratio threshold specified in the SLA, the packet delay of an application is greater than a delay threshold specified in the SLA, and the jitter of an application is greater than a jitter threshold specified in the SLA.

The generating a new application processing policy in S102 may be: generating a new application processing policy according to the obtained application performance, a preset adjustment algorithm, a preset SLA, and a type of the at least one application. For example, an adjustment algorithm corresponding to the type of at least one application may be determined in preset adjustment algorithms according to the type of the at least one application, and a new application processing policy is generated according to the obtained application performance, the preset SLA, and the adjustment algorithm corresponding to the type of the at least one application.

The new application processing policy may specifically include one or more of the following policies: a policy of adjusting the transmission bandwidth, and a policy of adjusting the parameters for processing the packet of the at least one application (hereinafter referred to as "processing parameter"). Preferably, the adjustment of the processing parameter and the transmission bandwidth falls within the requirements of the SLA; for example, when the bandwidth is increased for a higher-priority voice application, the bandwidth occupancy rate after the increase does not exceed the maximum bandwidth occupancy rate specified by the SLA for the voice application of this priority.

S103. Send the new application processing policy to the service router and the application processing server.

When receiving the new application processing policy, the application processing server generates a new packet of the at least one application according to the new application processing policy.

When receiving the new application processing policy, the service router adjusts a parameter corresponding to the new application processing policy according to the new application processing policy; and, according to the adjusted parameter, sends the new packet of the at least one application that is generated by the application processing server.

Optionally, the generating, by the application processing server, a new packet of the at least one application according to the new application processing policy may be: adjusting, by the application processing server, the packet generating parameter of the at least one application according to the policy of adjusting the packet processing parameter of the at least one application, and generating a new packet of the at least one application.

Optionally, the adjusting, by the service router, the parameter corresponding to the new application processing policy according to the new application processing policy may specifically be: adjusting, by the service router, the transmission bandwidth of the at least one application according to the policy of adjusting the transmission bandwidth.

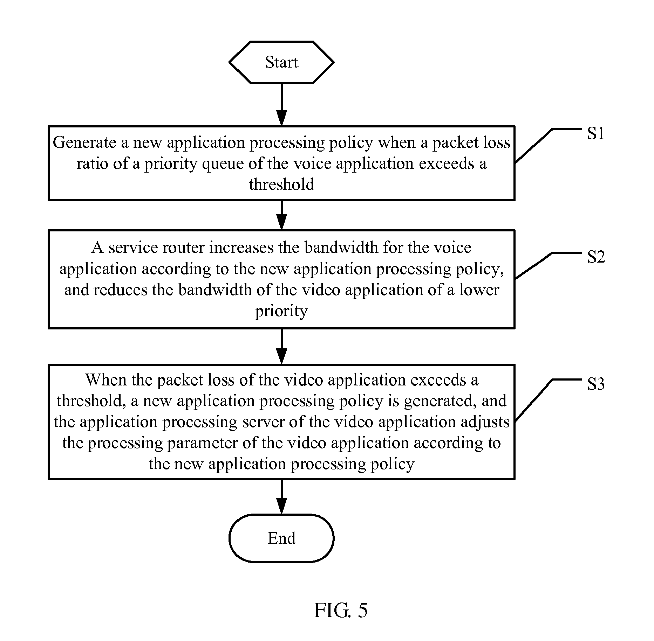

The following gives a specific example. FIG. 5 is a schematic flowchart of an instance of a method for implementing adaptive application performance. In this example, there are two applications: a video application and a voice application, where the priority of the voice application is higher than the priority of the video application.

S1. Generate a new application processing policy when a packet loss ratio of a priority queue of the voice application exceeds a threshold.

S2. The service router increases the bandwidth for the voice application according to the new application processing policy, and reduces the bandwidth of the video application of a lower priority. Because the total bandwidth is fixed, the bandwidth of the lower-priority video application decreases correspondingly.

S3. When the packet loss of the video application exceeds a threshold, a new application processing policy is generated, and the application processing server of the video application adjusts the processing parameter of the video application according to the new application processing policy.

Because the bandwidth of the video application is occupied, packet loss of the video application may occur. When the packet loss of the video application exceeds the threshold, a new application processing policy is generated. The application processing server of the video application adjusts the processing parameter of the video application according to the new application processing policy, for example, adjusts a coding parameter to reduce the resolution of the video application, or adjusts a compression parameter to compress the data of the video application to a relatively great extent, so that the data of the video application can be transmitted as much as possible under the current bandwidth and the packet loss of the video application is reduced.

The embodiment of the present invention brings the following beneficial effects:
If the application performance of at least one application currently transmitted meets a preset adaptive adjustment condition, a new application processing policy is generated; and the application processing server and the service router process and send the packet of the at least one application according to the new application processing policy, thereby ensuring that higher-priority applications fulfill the SLA without affecting normal use of lower-priority applications.

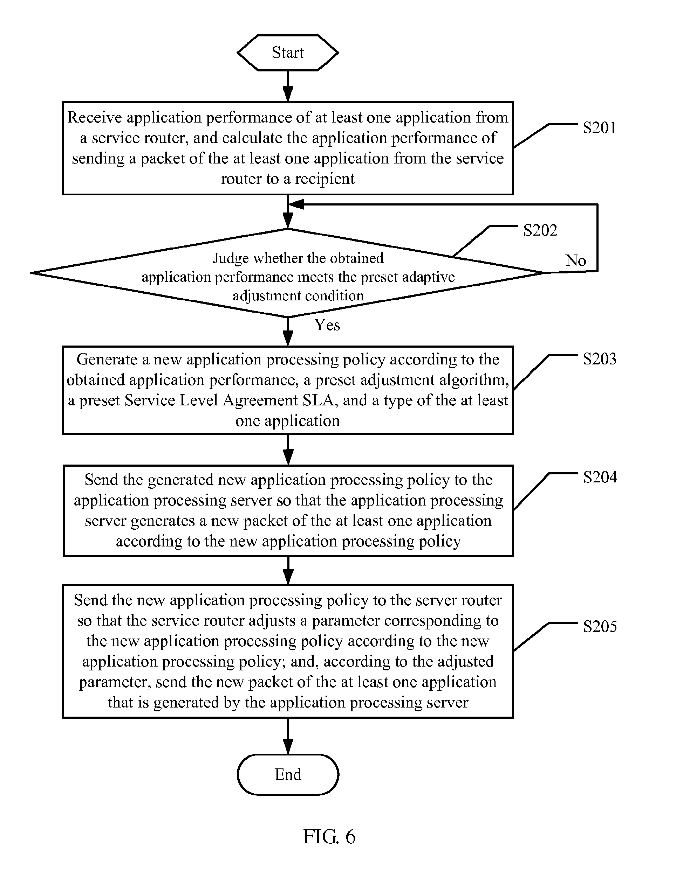

FIG. 6 is a schematic flowchart of a method for implementing adaptive application performance according to a second embodiment of the present invention. The method for implementing adaptive application performance in this embodiment includes the following steps:
S201. Receive application performance of at least one application from a service router, and calculate the application performance of sending a packet of the at least one application from the service router to a recipient.

Specifically, the obtained application performance includes: a packet loss ratio or a bandwidth utilization rate of a sending queue corresponding to the at least one application, a bandwidth utilization rate of the at least one application, and delay or jitter or packet loss of the packet of the at least one application from the service router to a recipient.

S202. Judge whether the obtained application performance meets a preset adaptive adjustment condition.

The judging whether the obtained application performance meets a preset adaptive adjustment condition includes:
judging whether the obtained application performance exceeds a preset threshold, and, if so, determining that the obtained application performance meets the preset adaptive adjustment condition, if not, determining that the obtained application performance does not meet the preset adaptive adjustment condition, where the preset threshold may be some preset numbers or values specified on the SLA. If the condition is met, the procedure proceeds to S203; otherwise, S202 goes on.

S203. Generate a new application processing policy according to the obtained application performance, a preset adjustment algorithm, a preset Service Level Agreement SLA, and a type of the at least one application.

S204. Send the generated new application processing policy to the application processing server so that the application processing server generates a new packet of the at least one application according to the new application processing policy.

S205. Send the new application processing policy to the server router so that the service router adjusts a parameter corresponding to the new application processing policy according to the new application processing policy; and, according to the adjusted parameter, send the new packet of the at least one application that is generated by the application processing server.

The embodiment of the present invention brings the following beneficial effects:
If the application performance of at least one application currently transmitted meets a preset adaptive adjustment condition, a new application processing policy is generated; and the application processing server and the service router process and send the packet of the at least one application according to the new application processing policy, thereby ensuring that higher-priority applications fulfill the SLA without affecting normal use of lower-priority applications.

A person of ordinary skill in the art may understand that all or a part of the processes of the methods in the foregoing embodiments may be implemented by a computer program instructing relevant hardware. The program may be stored in a computer readable storage medium. When the program runs, the processes of the foregoing methods in the embodiments are performed. The storage medium may be a magnetic disc, an optical disk, a read-only memory (Read-Only Memory, ROM), or a random access memory (Random Access Memory, RAM).

The foregoing disclosed descriptions are merely exemplary embodiments of the present invention. However, the protection scope of the present invention is not limited thereto. Therefore, equivalent variations made according to the claims of the present invention shall fall within the protection scope of the present invention.

## Claims

1. A method for implementing adaptive application performance, comprising:
obtaining application performance of at least one application, wherein a packet of the at least one application is transmitted on a service router;
generating a new application processing policy when the obtained application performance meets a preset adaptive adjustment condition; and
sending the new application processing policy to the service router and an application processing server.

2. The method according to claim 1, wherein the obtaining application performance of at least one application comprises:
receiving the application performance of the at least one application from the service router; and/or
calculating the application performance of the at least one application.

3. The method according to claim 2, wherein the generating a new application processing policy when the obtained application performance meets a preset adaptive adjustment condition comprises:
judging whether the obtained application performance meets the preset adaptive adjustment condition;
if the preset adaptive adjustment condition is met, generating a new application processing policy according to the obtained application performance, a preset adjustment algorithm, a preset Service Level Agreement SLA, and a type of the at least one application; and
the judging whether the obtained application performance meets the preset adaptive adjustment condition comprises:
judging whether the obtained application performance exceeds a preset threshold, if so, determining that the obtained application performance meets the preset adaptive adjustment condition, if not, determining that the obtained application performance does not meet the preset adaptive adjustment condition.

4. The method according to claim 3, wherein the sending the generated new application processing policy to the service router and an application processing server comprises:
sending the generated new application processing policy to the application processing server so that the application processing server generates a new packet of the at least one application according to the new application processing policy; and
sending the new application processing policy to the server router so that the service router adjusts a parameter corresponding to the new application processing policy according to the new application processing policy; and, according to the adjusted parameter, sending the new packet of the at least one application that is generated by the application processing server.

5. The method according to claim 4, wherein the obtained application performance comprises:
a packet loss ratio or a bandwidth utilization rate of a sending queue corresponding to the at least one application, a bandwidth utilization rate of the at least one application, and any one or more of delay, jitter, and packet loss of the packet of the at least one application from the service router to a recipient.

6. An apparatus for implementing adaptive application performance, comprising:
an obtaining module, configured to obtain application performance of at least one application, wherein a packet of the at least one application is transmitted on a service router;
a policy processing module, configured to generate a new application processing policy when the application performance obtained by the obtaining module meets a preset adaptive adjustment condition; and
a sending module, configured to send the new application processing policy generated by the policy processing module to the service router and the application processing server.

7. The apparatus according to claim 6, wherein the obtaining module comprises:
a first obtaining unit, configured to receive the application performance of the at least one application from the service router; and/or
a second obtaining unit, configured to calculate the application performance of the at least one application.

8. The apparatus according to claim 7, wherein the policy processing module comprises:
a judging unit, configured to judge whether the obtained application performance meets the preset adaptive adjustment condition;
a policy generating unit, configured to, if a judgment result of the judging unit is that the preset adaptive adjustment condition is met, generate a new application processing policy according to the obtained application performance, a preset adjustment algorithm, a preset SLA, and a type of the at least one application, wherein:
the judging unit judges whether the obtained application performance exceeds a preset threshold, if so, determines that the obtained application performance meets the preset adaptive adjustment condition, if not, determines that the obtained application performance does not meet the preset adaptive adjustment condition.

9. The apparatus according to claim 8, wherein the sending module comprises:
a first sending unit, configured to send the new application processing policy generated by the policy processing module to the application processing server so that the application processing server generates a new packet of the at least one application according to the new application processing policy; and
a second sending unit, configured to send the new application processing policy generated by the policy processing module to the server router so that the service router adjusts a parameter corresponding to the new application processing policy according to the new application processing policy; and, according to the adjusted parameter, send the new packet of the at least one application that is generated by the application processing server.

10. A system for implementing adaptive transmission performance, comprising an application processing server, a service router, and an apparatus for implementing adaptive transmission performance, wherein:
the apparatus for implementing adaptive transmission performance is configured to obtain application performance of at least one application, generate a new application processing policy when the obtained application performance meets a preset adaptive adjustment condition, and send the new application processing policy to the service router and the application processing server;
the application processing server is configured to generate a new packet of the at least one application according to the new application processing policy; and
the service router is configured to adjust a parameter corresponding to the new application processing policy according to the new application processing policy, and, according to the adjusted parameter, send the new packet of the at least one application that is generated by the application processing server.
